## Europäisches Patentamt
(19) **European Patent Office**
**Office européen des brevets**

(11) Veröffentlichungsnummer: **0 004 935**
**B1**

(12) **EUROPÄISCHE PATENTSCHRIFT**

(45) Veröffentlichungstag der Patentschrift:
**18.03.81**

(21) Anmeldenummer: **79101104.2**

(22) Anmeldetag: **11.04.79**

(51) Int. Cl.³: **B 29 B 1/06,** B 02 C 18/44,
B 01 F 15/06

(54) Mischer zum Zerkleinern und Verdickten von Thermoplastmaterial und Verfahren zum Betrieb eines solchen Mischers.

(30) Priorität: **13.04.78 DE 2815935**

(43) Veröffentlichungstag der Anmeldung:
**31.10.79 Patentblatt 79/22**

(45) Bekanntmachung des Hinweises auf die Patenterteilung:
**18.03.81 Patentblatt 81/11**

(84) Benannte Vertragsstaaten:
**DE FR GB IT**

(56) Entgegenhaltungen:
**DE-A-2 646 077**
**DE-C-1 244 122**
**DE-C-1 757 028**
**FR-A-2 354 136**

(73) Patentinhaber: **Herfeld, Friedrich Walter, Dr., Wall 1,
D-5982 Neuenrade (DE)**

(72) Erfinder: **Herfeld, Friedrich Walter, Dr., Wall 1,
D-5982 Neuenrade (DE)**

(74) Vertreter: **Hassler, Werner, Dr. et al, Postfach 1704,
D-5880 Lüdenscheid (DE)**

## Mischer zum Zerkleinern und Verdichten von Thermoplastmaterial und Verfahren zum Betrieb eines solchen Mischers

Die Erfindung betrifft einen Mischer zum Zerkleinern und Verdichten von Thermoplastmaterial, insbesondere Abfällen aus Folien, Fasern, Bändchen und Hohlkörpern, mit einem auf dem Deckel eines Mischbehälters angebrachten Aufgabetrichter, einer von dem Mischbehälter gebildeten Umwälzkammer mit einem Auslaufschieber, in welcher nach Zerkleinerung und Verdichtung die Abkühlung des Thermoplastmaterials erfolgt, einer vertikalen Rührwerkswelle, die in Bodennähe bis etwa zur Behälterwandung reichende Rührflügel innerhalb der Umwälzkammer trägt, und mit einer kopfseitigen Zerkleinerungskammer, in der von der Rührwerkswelle angetriebene Zerkleinerungsmesser umlaufen und die mit feststehenden Gegenmessern versehen ist, an ihrem der Umwälzkammer zugewandten bodenseitigen Ende eine Abschlußscheibe aufweist und über eine Übergangsöffnung mit der Umwälzkammer in Verbindung steht.

Ein Mischer dieser Art ist aus der DE-OS 22 58 197 bekannt, bei dem innerhalb eines einzigen Mischbehälters die Zerkleinerung, die Erhitzung, die Granulierung und die Abkühlung durchgeführt werden. Bei einem derartigen Mischer ergeben sich in der Verfahrensführung dadurch Schwierigkeiten, daß die Granulierung und die Abkühlung nicht kontinuierlich durchgeführt werden können. Damit während der Abkühlphase des granulierten Thermoplastmaterials innerhalb der Umwälzkammer keine negative Beeinflussung erfolgt, ist es notwendig, die Materialzufuhr zu der Zerkleinerungskammer während der Abkühlphase abzusperren. Dieses bedeutet, daß eine kontinuierliche Zufuhr des Ausgangsmaterials durch den Aufgabetrichter hier nicht möglich ist.

Es sind auch bereits Mischer bekanntgeworden, die für diesen Zweck zwei oder mehrere gesonderte Mischbehälter aufweisen. Derartige Anlagen sind entsprechend umfangreich.

Aufgabe der Erfindung ist eine solche Ausbildung eines Mischers der eingangs genannten Art, daß eine kontinuierliche Zufuhr des Materials möglich ist und daß trotzdem eine vollständige und befriedigende Verdichtung des Gutes durchgeführt werden kann.

Diese Aufgabe wird nach der Erfindung dadurch gelöst, daß die in der Ringwandung der Zerkleinerungskammer vorgesehene Übergangsöffnung zu deren Schließung während der Abkühlung des Thermoplastmaterials in der Umwälzkammer absperrbar ausgebildet ist.

Diese Ausführungsform eines Mischers ergibt sich nicht in naheliegender Weise aus dem Stand der Technik, weil nach der Erfindung die Übergangsöffnung zur Abkühlkammer während der Endphase der Verdichtung und/oder Kühlung abgeschlossen ist und damit eine Materialzufuhr in die Abkühlcharge ausschließt. Trotzdem ist eine kontinuierliche Materialzufuhr über den Aufgabetrichter möglich.

Im einzelnen ist eine Arbeitsweise des Mischers derart möglich, daß die Zerkleinerungskammer gegenüber der Umwälzkammer des Mischbehälters normalerweise offen ist, so daß das dem Aufgabetrichter kontinuierlich zugeführte Gut nach der Zerkleinerung kontinuierlich in die Umwälzkammer des Mischbehälters eintritt und dort unter der Wirkung der Rührflügel umgewälzt und aufgeheizt wird. Sobald die Temperatur innerhalb der Umwälzkammer des Mischbehälters den Verdichtungsbereich erreicht, wird die Übergangsöffnung von der Zerkleinerungskammer abgeschlossen, so daß das in der Umwälzkammer des Mischbehälters befindliche Gut verdichtet und anschließend granuliert und abgekühlt werden kann. Nach der Kühlung wird das Granulat abgelassen. Während dieser Betriebsphase dient die Zerkleinerungskammer zur Pufferung des kontinuierlich über den Aufgabetrichter zugeführten Materials. Die Übergangsöffnung wird nach der Entleerung der Umwälzkammer wieder geöffnet, so daß das gepufferte Gut in die Umwälzkammer übertreten kann.

Nach einer anderen Arbeitsweise erfolgt innerhalb der Zerkleinerungskammer auch eine Verdichtung bei geschlossener Übergangsöffnung. Das Gut wird dann nach Öffnen der Übergangsöffnung in die Umwälzkammer des Mischbehälters abgelassen. Während der Abkühlung wird die Übergangsöffnung wieder geschlossen, damit während des Abkühlvorgangs kein Gut in die Umwälzkammer übertreten kann. Die Zerkleinerungskammer nimmt in diesem Fall das Gut zur Zerkleinerung und Verdichtung bzw. Vorverdichtung auf.

Nach einer Weiterbildung der Erfindung ist vorgesehen, daß die Abschlußscheibe fest mit der Rührwerkswelle verbunden ist und auf ihrer der Umwälzkammer abgewandten Innenseite die Zerkleinerungsmesser trägt, und daß der Rand der Abschlußscheibe der Ringwandung direkt gegenübersteht. Damit ergibt sich ein besonders einfacher Aufbau des Mischers. Das beim Schließen der Übergangsöffnung in der Zerkleinerungskammer gepufferte Gut wird nach dem Öffnen der Übergangsöffnung unter der Wirkung der Zentrifugalkraft sehr schnell ausgetragen, weil die Abschlußscheibe wie ein Schleuderteller wirkt.

Damit eine vollständige Verdichtung innerhalb der Zerkleinerungskammer möglich ist, wird durch die Erfindung ferner vorgeschlagen, daß an den Aufgabetrichter ein innerhalb der Zerkleinerungskammer liegender konzentrisch zur Rührwerkswelle ausgerichteter Ringansatz mit den Gegenmessern angesetzt ist, daß ein scheibenförmiges Kopfstück der Rührwerkswelle einen schmalen Spalt gegenüber der Ringwandung des Ringansatzes freiläßt und die Zerkleinerungsmesser trägt, und daß zusätzlich an der Rührwerkswelle innerhalb der Zerkleinerungskammer liegende Mischflügel vorgesehen sind.

Nach einer weiteren Ausführungsform der Erfindung ist vorgesehen, daß die Abschlußscheibe mit der Ringwandung der Zerkleinerungskammer fest verbunden ist, und daß die Rührwerkswelle durch einen Durchgang der Abschlußscheibe geht und vorzugsweise in einem Lagerring derselben gelagert ist. Mit dieser Ausführungsform erhält man einen sehr kompakten Aufbau der Zerkleinerungskammer, der sich besonders für eine Vorverdichtung bzw. Verdichtung des Materials innerhalb der Zerkleinerungskammer eignet.

Nach einer weiteren Ausführungsform der Erfindung ist vorgesehen, daß innerhalb der Umwälzkammer am Umfang der Abschlußscheibe über zwischen sich Eintrittsöffnungen freilassende Stege ein Statorring festgehalten ist, welcher eine Umfangssiebplatte trägt, und daß eine mit der Rührwerkswelle verbundene und an ihrem Umfang Rührflügel tragende Rotorscheibe mit ihrem Umfangsrand dem freien Stirnrand der Umfangssiebplatte unmittelbar gegenübersteht, wobei die Rotorscheibe Schneidleisten trägt, die mit am Statorring gehaltenen Gegenschneidleisten zusammenarbeiten. Diese Ausführungsform der Erfindung ist besonders dann vorteilhaft, wenn innerhalb der Umwälzkammer lediglich eine Kühlung erfolgt, da dann durch die Umfangssiebplatte eine gleichmäßige Körnung des Materials gewährleistet ist. Denn bei der Umwälzung des Materials muß das Material immer durch die Umfangssiebplatte hindurchtreten, so daß nur die ausreichend klein geschnittenen Teile zur vollständigen Abkühlung gelangen können.

Zur Sicherstellung einer hohen Kühlwirkung sieht die Erfindung ferner vor, daß im Mantel des Mischbehälters oberhalb des Bodens eine verschließbare Kühllufteinblasöffnung vorgesehen ist, die mit einem Gebläse in Verbindung steht, dessen Saugseite zur Einblasung von Kühlluft in die Umwälzkammer an den Schacht des Aufgabetrichters angeschlossen ist, und daß gegebenenfalls innerhalb der Kühllufteinblasöfnung eine Wassereinspritzvorrichtung vorgesehen ist.

Eine besonders wirkungsvolle Kühllufteinblasung erzielt man dadurch, daß ein Gebläserotor unterhalb des Bodens des Mischbehälters auf der Rührwerkswelle sitzt, und daß der Druckraum des Gebläses zur Einblasung von Kühlluft in die Umwälzkammer über eine oder mehrere Verbindungsleitungen mit dem Behälterinnenraum an dessen bodenseitigem Ende verbunden ist.

Die Erfindung betrifft weiterhin ein Verfahren zum Betrieb eines Mischers der angegebenen Art, wonach die Übergangsöffnung während der Abkühlung des Thermoplastmaterials in der Umwälzkammer geschlossen wird, so daß das aufgegebene Material während dieser Zeitspanne in der Zerkleinerungskammer gepuffert wird.

Diese Verfahrensführung ermöglicht die gewünschte kontinuierliche Aufgabe des Mischgutes.

In Weiterbildung dieses Verfahrens wird die Übergangsöffnung bereits bei der Aufgabe und Zerkleinerung des Gutes in der Zerkleinerungskammer geschlossen, so daß in der Zerkleinerungskammer auch eine Verdichtung des Materials erfolgt, wobei nachfolgend zur Austragung des Gutes in die Umwälzkammer die Übergangsöffnung geöffnet und nach beendeter Austragung wieder geschlossen wird. Mit dieser Ausführungsform der Erfindung ist nicht nur eine kontinuierliche Aufgabe des Materials, sondern auch eine kontinuierliche Austragung des gekühlten Materials möglich.

Ausführungsformen der Erfindung werden im folgenden unter Bezugnahme auf die anliegenden Zeichnungen erläutert, in denen darstellen:

Fig. 1 eine Ansicht eines Mischers nach der Erfindung,

Fig. 2 eine Draufsicht zu Fig. 1,

Fig. 3 eine Ansicht einer abgewandelten Ausführungsform eines Mischers,

Fig. 4 eine Abwandlung des in Fig. 1 dargestellten Mischers,

Fig. 5 eine Abwandlung des in Fig. 3 dargestellten Mischers,

Fig. 6 eine abgewandelte Ausführungsform des Mischers und

Fig. 7 eine weitere Ausführungsform der Erfindung.

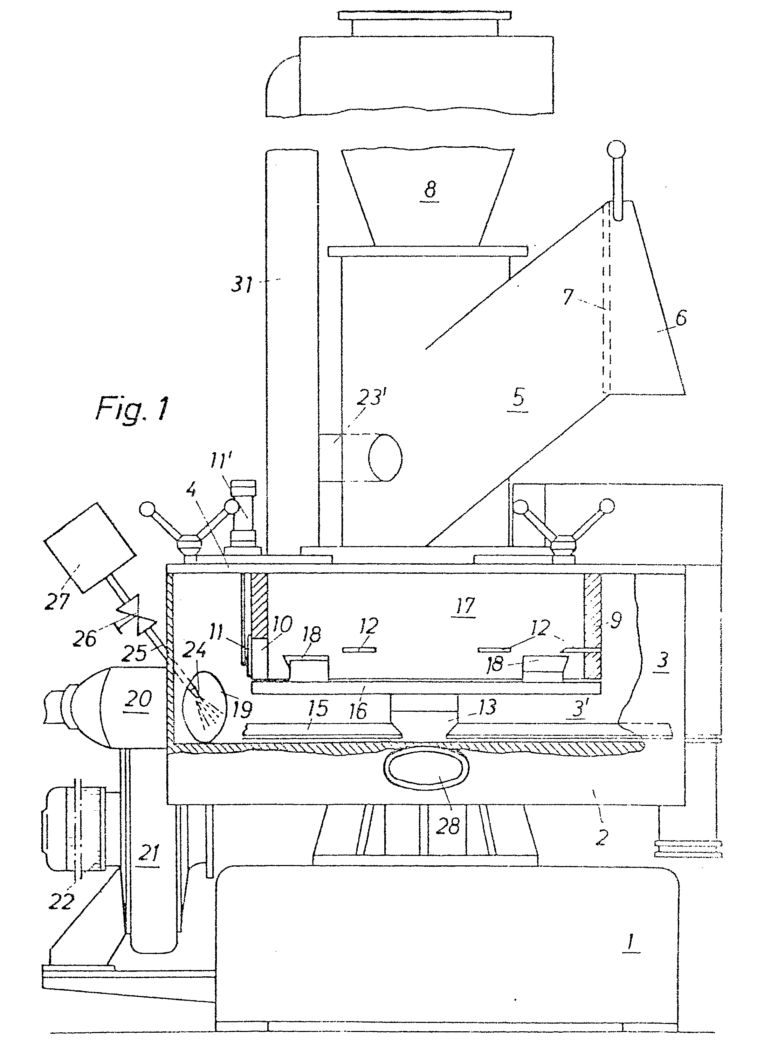

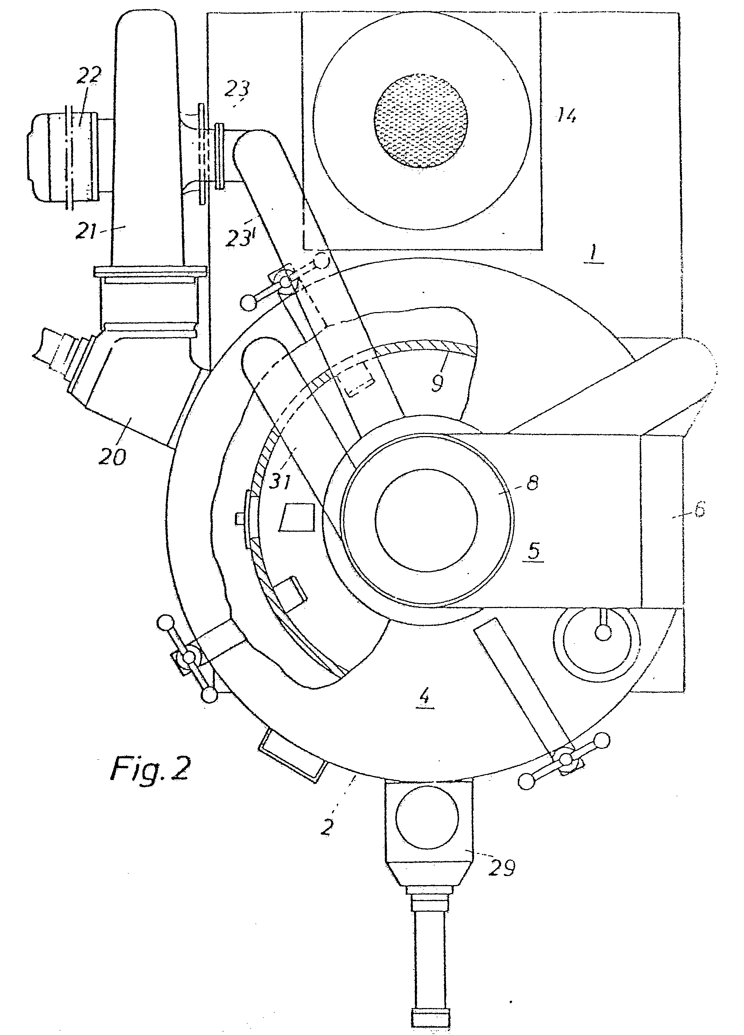

Der in den Fig. 1 und 2 dargestellte Mischer ist auf einem Sockel 1 aufgebaut. Ein Mischbehälter 2 mit vertikal ausgerichteter Achse und einem zylindrischen Mantel 3 ist durch einen Deckel 4 abgeschlossen. Auf dem Deckel sitzt ein Aufgabetrichter 5, dessen Einfüllstutzen 6 durch eine Klappe 7 abschließbar ist. Auf dem Einfüllstutzen 6 sitzt ein Reinigungsaufsatz 8, der eine Luftreinigung ermöglicht, z. B. ein Zyklon.

An dem Deckel 4 sitzt konzentrisch zur Achse des Mischbehälters 2 eine Ringwandung 9 mit mindestens einer Übergangsöffnung 10, die durch einen von einer Stellvorrichtung 11' verstellbaren Schieber 11 abschließbar ist. Es kann sich um einzelne, voneinander getrennte Übergangsöffnungen 10 handeln, die Übergangsöffnung kann auch als umlaufender Ringspalt ausgebildet sein. Am Umfang der Ringwandung 9 sitzen mehrere Gegenmesser 12.

Durch die Bodenwandung des Mischbehälters 2 ist eine Rührwerkswelle 13 eingeführt, die in Antriebsverbindung mit einem Motor 14 steht. Die Antriebselemente sind Keilriemen, Ketten, Zahnräder u. dgl., was im einzelnen nicht dargestellt ist. Die Rührwerkswelle 13 trägt Rührflügel 15, die in Bodennähe bis etwa zur Behälterwandung reichen. Auf der Rührwerkswelle sitzt eine Abschlußscheibe 16, deren Rand dem Stirnrand der Ringwandung 9 unmittelbar gegenübersteht und damit einen Abschluß der durch die Ringwandung 9 begrenzten Zerkleinerungskammer 17 bildet. Auf der Abschlußscheibe 16 sitzen Zerkleinerungsmesser 18, die mit den Gegenmessern 12 zusammenwirken.

Im unteren Bereich des Mantels 3 ist eine Kühllufteinblasöffnung 19 angeordnet, die über eine Leitung 20 an ein Gebläse 21 angeschlossen ist. Das Gebläse 21 ist von einem Motor 22 angetrieben. Der Saugstutzen 23 des Gebläses 21 ist über eine Leitung 23′ mit dem Aufgabetrichter 5 verbunden, so daß durch das Gebläse 21 die Kühlluft aus dem Aufgabetrichter 5 angesaugt werden kann. Im Bereich der Kühllufteinblasöffnung 19 befindet sich eine Wassereinspritzvorrichtung 24, die über eine Leitung 25 und ein Ventil 26 an einen Wasserbehälter 27 angeschlossen ist. Eine Leitung 31 verbindet den Deckel 4 des Mischbehälters mit dem Reinigungsaufsatz 8, so daß die Kühlluft nach Durchtritt durch das Gut durch den Zyklon innerhalb des Reinigungsaufsatzes 8 austreten kann.

Am Boden des Mischbehälters 2 befindet sich eine Austrittsöffnung 28, an die ein Stutzen eines Auslaufschiebers 29 angeschlossen ist.

Der beschriebene Mischer arbeitet in der Weise, daß aufzubereitendes Gut, etwa Abfälle von Folien, Fasern, Bändchen oder Hohlkörpern kontinuierlich in den Einfüllstutzen 6 eingegeben und über den Aufgabetrichter 5 der Zerkleinerungskammer 17 zugeführt wird. Dort erfolgt ein Zerschneiden bzw. eine Zerkleinerung des Gutes durch die mit der Rührwerkswelle 13 umlaufenden Zerkleinerungsmesser 18 in Zusammenwirken mit den Gegenmessern 12. Normalerweise ist die Übergangsöffnung 10 offen, so daß das geschnittene bzw. zerkleinerte Gut kontinuierlich in die Umwälzkammer 3′ des Mischbehälters 2 gelangen kann. Die Rührflügel 15 erfassen das Gut, wälzen dasselbe um und bringen durch Reibungswirkung Wärme in das Gut ein, so daß dasselbe auf die Gelierungstemperatur aufgeheizt wird, damit eine Verdichtung erfolgen kann. Diese Aufheizung erfolgt bei kontinuierlicher Zufuhr des Gutes ebenfalls kontinuierlich. Sobald die Verdichtungstemperatur erreicht ist, wird der Schieber 11 geschlossen, so daß aus der Zerkleinerungskammer 17 kein Gut mehr in die Umwälzkammer 3′ des Mischbehälters austreten kann. In der Zerkleinerungskammer 17 erfolgt dann eine Pufferung des weiterhin kontinuierlich zugeführten und zerkleinerten Gutes. Der Verdichtungsvorgang kann innerhalb des Mischbehälters 2 zum Abschluß kommen. Im Anschluß an die Verdichtung wird durch die Kühllufteinblasöffnung Kühlluft eingeblasen. Der Kühlluft kann erforderlichenfalls durch die Wassereinspritzvorrichtung 24 Wasser beigemischt werden, damit der Kühlvorgang schneller abläuft. Das eingespritzte Wasser wird dabei innerhalb des Mischgutes verdampft. Die Ansaugung der Kühlluft erfolgt aus dem Aufgabetrichter 5, um bei der Zerkleinerung entstehenden Staub abzusaugen und die Aufgabe des Gutes durch Ansaugung zu unterstützen. Nach Abschluß der Abkühlphase wird das Granulat durch den Auslaufschieber 29 abgelassen. Der Schieber 11 wird wieder geöffnet, so daß das in der Zerkleinerungskammer 17 gepufferte Gut in die Umwälzkammer 3′ des Mischbehälters 2 ausgetragen wird. Die umlaufende Abschlußscheibe 16 unterstützt und fördert diese Austragung.

In abgewandelter Verfahrensführung kann die Übergangsöffnung 10 auch während der Aufgabe des Gutes und der Zerkleinerung desselben geschlossen bleiben, damit in der Zerkleinerungskammer auch eine Verdichtung erfolgt. Zur abschließenden Bearbeitung wird die Übergangsöffnung geöffnet, so daß das Gut in die Umwälzkammer des Mischbehälters ausgetragen wird. Dort erfolgt gegebenenfalls die endgültige Verdichtung und in jedem Fall die Abkühlung. Während der Abkühlung bleibt die Übergangsöffnung in jedem Fall geschlossen.

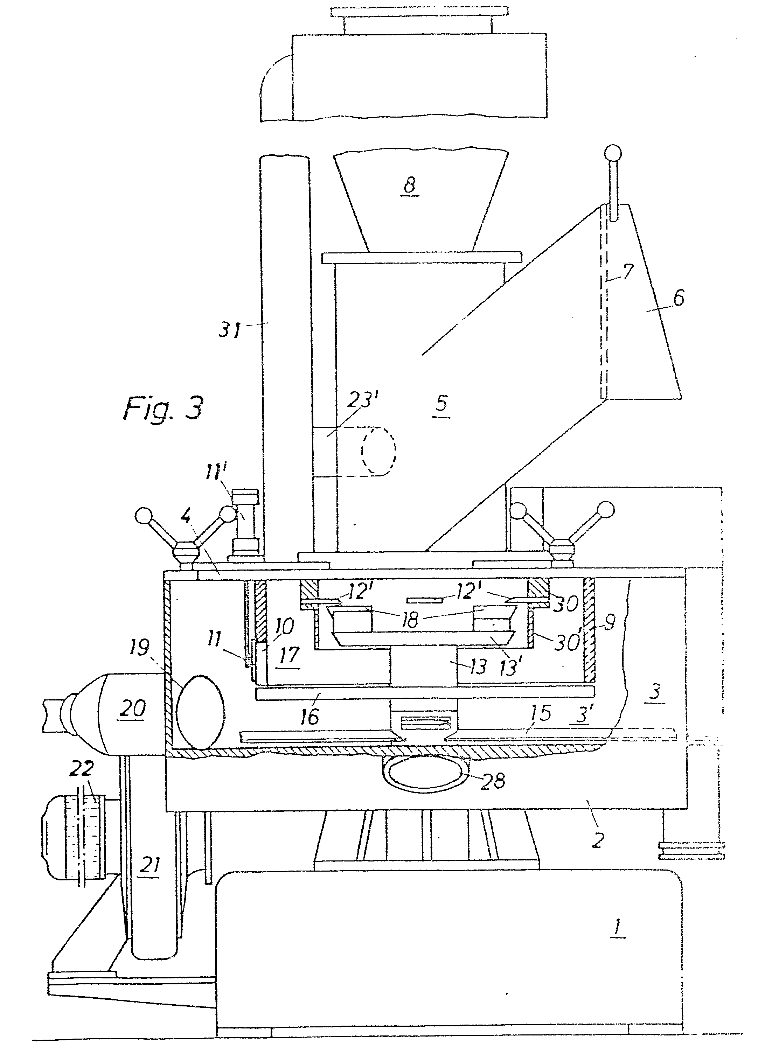

Fig. 3 zeigt eine abgewandelte Ausführungsform der Erfindung, bei der ebenfalls eine Abschlußscheibe 16 die Zerkleinerungskammer 17 abschließt. Die Gegenmesser 12′ sitzen hier nicht an der Ringwandung 9, sondern vielmehr an einem Ringansatz 30 des Aufgabetrichters. Mit den Gegenmessern 12′ wirken auch hier Zerkleinerungsmesser 18 zusammen, die auf einem scheibenförmigen Kopfstück 13′ der Rührwerkswelle 13 sitzen. Das scheibenförmige Kopfstück 13′ läßt zu einer Ringwandung 30′ des Ringansatzes 30 einen schmalen Spalt frei. Der Schnitt erfolgt in diesem Fall auf einer Bahn mit einem vergleichsweise geringen Radius. Dieses ist in manchen Fällen im Hinblick auf die Abstimmung des Schneidmoments der Zerkleinerungsmesser 18 mit dem Antriebsmoment der Rührflügel 15 von Bedeutung. Das geschnittene Gut fällt durch den schmalen Spalt auf die Abschlußscheibe 16 und wird über die durch den Schieber 11 abschließbare Übergangsöffnung 10 ausgetragen. Die Arbeitsweise dieses Mischers entspricht der Arbeitsweise des Mischers nach den Fig. 1 und 2.

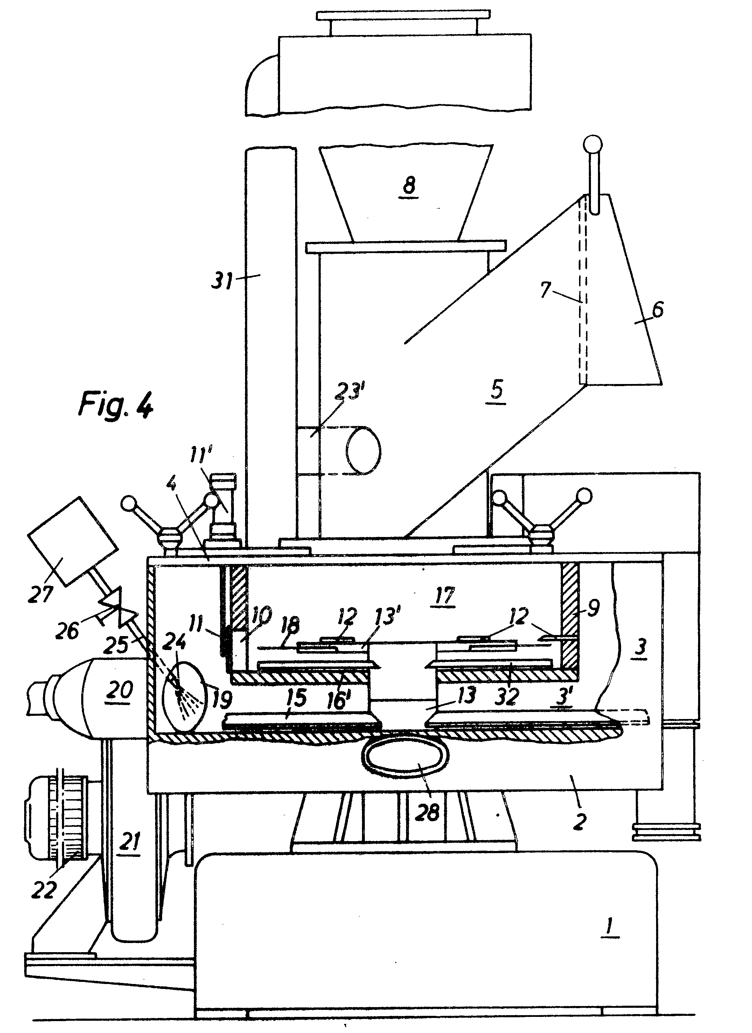

Fig. 4 zeigt eine Abwandlung der Ausführungsform nach Fig. 1. Die Abschlußscheibe 16′ sitzt fest an der Ringwandung 9 und schließt so die Zerkleinerungskammer 17 ab. Durch einen zentralen Durchgang der Abschlußscheibe 16′ reicht die Rührwerkswelle 13 hindurch, die an einem Kopfstück 13′ Zerkleinerungsmesser 18 trägt. Die Rührwerkswelle 13 trägt ferner innerhalb der Zerkleinerungskammer 18 angeordnete Austragflügel 32, die zur Umwälzung des Gutes innerhalb der Zerkleinerungskammer 17, gegebenenfalls auch zur Verdichtung bzw. Vorverdichtung des Gutes dienen und in jedem Fall für einen Austrag des Gutes durch die Übergangsöffnung 10 sorgen, wenn dieselbe geöffnet ist.

Die Arbeitsweise dieses Mischers entspricht der obigen Beschreibung.

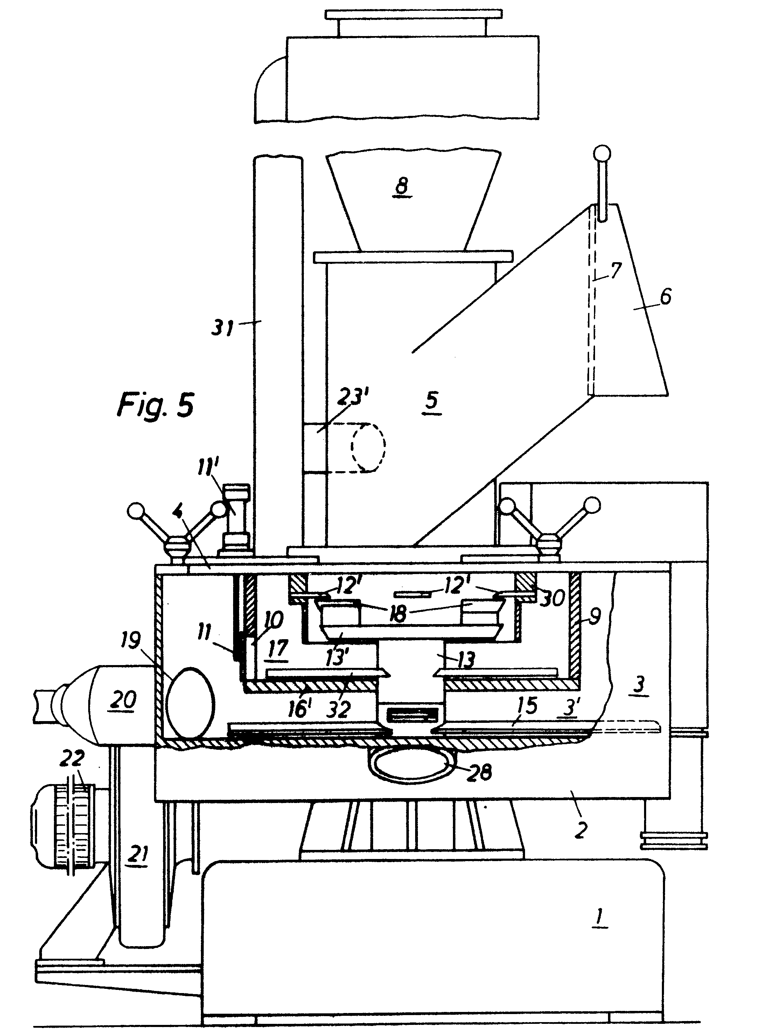

Fig. 5 zeigt eine Abwandlung des Mischers nach Fig. 3. Auch hier ist eine Abschlußscheibe 16′ mit der Ringwandung 9 fest verbunden. Innerhalb der Zerkleinerungskammer 17 sind auf der Rührwerkswelle 13, die durch eine zentrale Öffnung der Abschlußscheibe 16′ hindurchreicht, Austragflügel 32 angeordnet. Die Arbeitsweise dieser Vorrichtung entspricht der obigen Beschreibung.

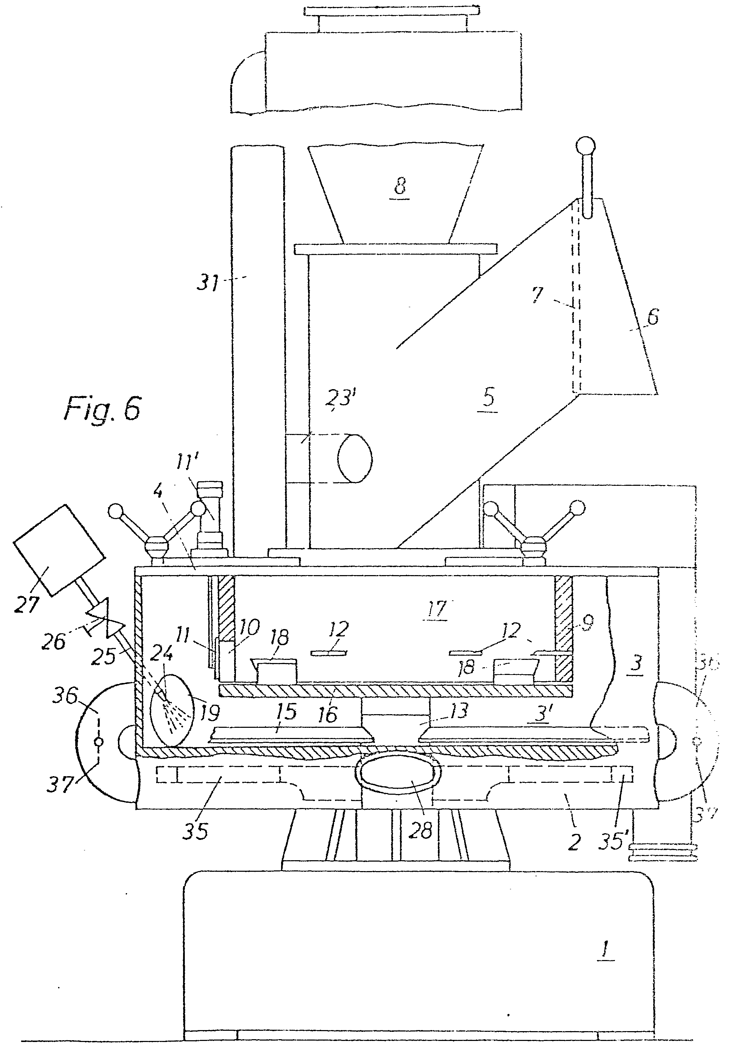

Fig. 6 zeigt eine abgewandelte Ausführungsform des Mischers. Im Bodenteil des Mischbehälters 2 ist innerhalb einer Kammer 35' ein Gebläserotor 35 angeordnet, der auf der Rührwerkswelle 13 sitzt. Der Ansaugstutzen des Gebläses ist nicht dargestellt. Derselbe kann mit der Leitung 23' verbunden sein. Die Druckkammer des Gebläses ist über Leitungen 36 mit den Kühllufteinblasöffnungen 19 verbunden. Innerhalb der Leitungen 36 sind Absperrvorrichtungen 37 angeordnet.

Diese Ausführungsform der Erfindung ermöglicht eine besonders raumsparende Unterbringung des Kühlluftgebläses.

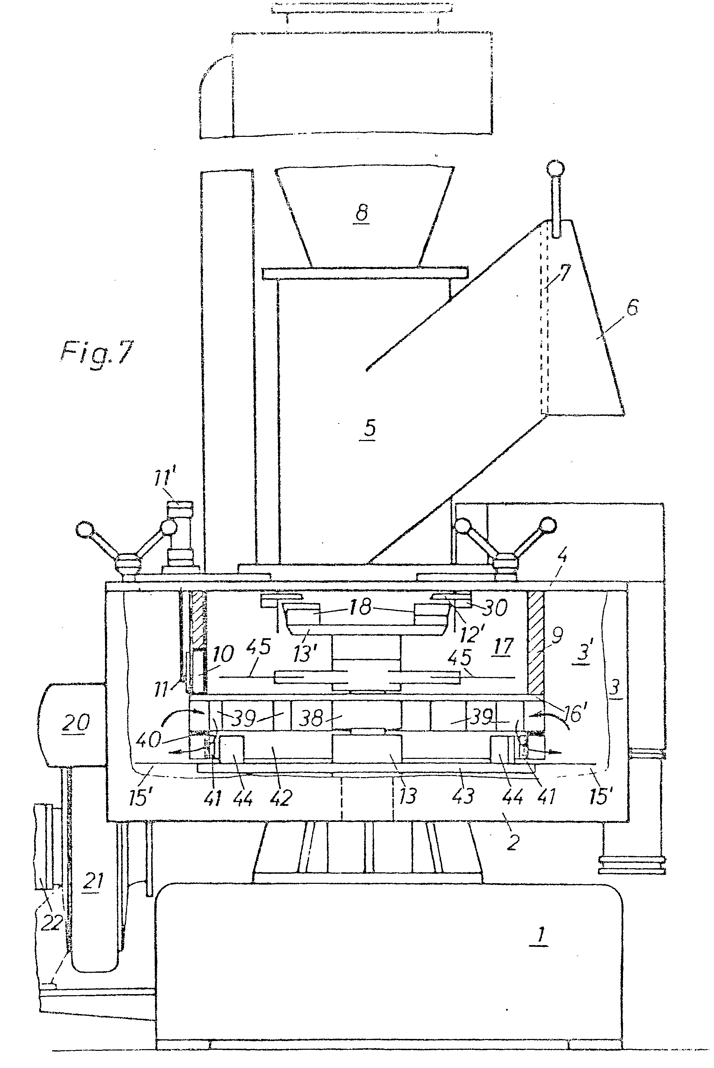

Die Ausführungsform nach Fig. 7 trägt an der Abschlußscheibe 16' einen Lagerring 38 für die Rührwerkswelle 13. Am Umfang der Abschlußscheibe 16' ist über Stege 39 ein Statorring 40 gehalten, der einerseits Gegenschneidleisten 41 und andererseits eine Umfangssiebplatte 42 trägt.

Auf der Rührwerkswelle 13 sitzt eine Rotorscheibe 43, die mit ihrem Rand dem Stirnrand der Umfangssiebplatte 42 gegenübersteht und damit einen Materialfluß nach unten innerhalb der Fläche der Rotorscheibe 43 ausschließt. Am Umfang der Rotorscheibe 43 sind Rührflügel 15' vorgesehen. Erforderlichenfalls können auch unterhalb der Rotorscheibe 43 Rührflügel 15' angeordnet sein. Außerdem trägt die Rotorscheibe 43 Schneidleisten 44, die mit den Gegenschneidleisten 41 zusammenwirken. Innerhalb der Zerkleinerungskammer 17 sind auf der Rührwerkswelle 13 Mischflügel 45 vorgesehen.

Die Arbeitsweise dieses Mischers ist folgende. Bei geschlossenem Schieber 11 wird kontinuierlich Material durch den Aufgabetrichter 5 eingegeben. Es handelt sich dabei um Thermoplastmischungen mit Beimengungen von wiederaufzubereitendem Material. Das Material hat infolgedessen unterschiedliche Form und unterschiedliche Korngrößen. Das Material wird durch die Zerkleinerungsmesser 18 zusammen mit den Gegenmessern 12' geschnitten und fällt in die Zerkleinerungskammer 17. Die Mischflügel 45 bewirken eine intensive Vermischung und gleichzeitig eine Aufheizung des Materials bis zur Verdichtungstemperatur, so daß eine Gelierung und Plastifizierung erfolgt. Sobald bei fortgesetzter Materialzufuhr die Verdichtungstemperatur erreicht ist, wird der Schieber 11 geöffnet, so daß das Material in die Umwälzkammer 3' ausgetragen wird. Dort erfolgt durch die gekühlten Behälterwände und/oder durch Kühlluftzufuhr eine Kühlung. Das Material wird durch die Rührflügel 15' weiterhin umgewälzt und gelangt bei der Umwälzbewegung durch die Öffnungen zwischen den Stegen 39 in den Innenraum innerhalb der Umfangssiebplatte 42 und der Rotorscheibe 43. Diejenigen Teile des Materials, deren Körnung kleiner als die Siebweite der Umfangssiebplatte 42 ist, können ohne weiteres in den Außenraum durchtreten und werden dort weiter gekühlt und umgewälzt. Größere Teile werden durch die Schneidleisten geschnitten, bis die gewünschte Korngröße erreicht ist und auch diese Teile durch die Umfangssiebplatte 42 hindurchtreten können. Das Material wird fortgesetzt gekühlt und kann während dieser Kühlung kontinuierlich ausgetragen werden. Der Schieber 11 ermöglicht somit eine Pufferung bei der Aufgabe zur Verdichtung des Materials. Innerhalb der Umwälzkammer 3' wird eine größere Charge gekühlt und während der Kühlung kontinuierlich ausgetragen.

## Patentansprüche

1. Mischer zum Zerkleinern und Verdichten von Thermoplastmaterial, insbesondere Abfällen aus Folien, Fasern, Bändchen und Hohlkörpern, mit einem auf dem Deckel (4) eines Mischbehälters (2) angebrachten Aufgabetrichter (5), einer von dem Mischbehälter (2) gebildeten Umwälzkammer (3') mit einem Auslaufschieber (29), in welcher nach Zerkleinerung und Verdichtung die Abkühlung des Thermoplastmaterials erfolgt, einer vertikalen Rührwerkswelle (13), die in Bodennähe bis etwa zur Behälterwandung (3) reichende Rührflügel (15) innerhalb der Umwälzkammer (3') trägt, und mit einer kopfseitigen Zerkleinerungskammer (17), in der von der Rührwerkswelle (13) angetriebene Zerkleinerungsmesser (18) umlaufen und die mit feststehenden Gegenmessern (12) versehen ist, an ihrem der Umwälzkammer (3') zugewandten bodenseitigen Ende eine Abschlußscheibe (16 bzw. 16') aufweist und über eine Übergangsöffnung (10) mit der Umwälzkammer (3') in Verbindung steht, dadurch gekennzeichnet, daß die in der Ringwandung (9) der Zerkleinerungskammer (17) vorgesehene Übergangsöffnung (10) zu deren Schließung während der Abkühlung des Thermoplastmaterials in der Umwälzkammer (3') absperrbar ausgebildet ist.

2. Mischer nach Anspruch 1, dadurch gekennzeichnet, daß die Abschlußscheibe (16) fest mit der Rührwerkswelle (13) verbunden ist und auf ihrer der Umwälzkammer (3') abgewandten Innenseite die Zerkleinerungsmesser (18) trägt, und daß der Rand der Abschlußscheibe (16) der Ringwandung (9) direkt gegenübersteht (Fig. 1 und 6).

3. Mischer nach Anspruch 1, dadurch gekennzeichnet, daß an den Aufgabetrichter (5) ein innerhalb der Zerkleinerungskammer (17) liegender, konzentrisch zur Rührwerkswelle (13) ausgerichteter Ringansatz (30) mit den Gegenmessern (12') angesetzt ist, daß ein scheibenförmiges Kopfstück (13') der Rührwerkswelle einen schmalen Spalt gegenüber der Ringwandung (30') des Ringansatzes freiläßt und die Zerkleinerungsmesser (18) trägt, und daß zusätzlich an der Rührwerkswelle (13) innerhalb der Zerkleinerungskammer liegende Mischflügel (45) vorgesehen sind (Fig. 7).

4. Mischer nach Anspruch 1 oder 3, dadurch gekennzeichnet, daß die Abschlußscheibe (16') mit der Ringwandung (9) der Zerkleinerungskammer (17) fest verbunden ist, und daß die Rührwerkswelle (13) durch einen Durchgang der Abschlußscheibe (16') geht und vorzugsweise in einem Lagerring (38) derselben gelagert ist (Fig. 4, 5 und 7).

5. Mischer nach Anspruch 4, dadurch gekennzeichnet, daß innerhalb der Umwälzkammer (3') am Umfang der Abschlußscheibe (16') über zwischen sich Eintrittsöffnungen freilassende Stege (39) ein Statorring (40) festgehalten ist, welcher eine Umfangssiebplatte (42) trägt, und daß eine mit der Rührwerkswelle (13) verbundene und an ihrem Umfang Rührflügel (15') tragende Rotorscheibe (43) mit ihrem Umfangsrand dem freien Stirnrand der Umfangssiebplatte (42) unmittelbar gegenübersteht, wobei die Rotorscheibe Schneidleisten (44) trägt, die mit am Statorring (40) gehaltenen Gegenschneidleisten (41) zusammenarbeiten (Fig. 7).

6. Mischer nach Anspruch 4, dadurch gekennzeichnet, daß innerhalb der Zerkleinerungskammer (17) mit der Rührwerkswelle verbundene Austragflügel (32) vorgesehen sind (Fig. 4 und 5).

7. Mischer nach einem der Ansprüche 1 bis 6, dadurch gekennzeichnet, daß im Mantel (3) des Mischbehälters (2) oberhalb des Bodens eine verschließbare Kühllufteinblasöffnung (19) vorgesehen ist, die mit einem Gebläse (21) in Verbindung steht, dessen Saugseite zur Einblasung von Kühlluft in die Umwälzkammer (3') an den Schacht des Aufgabetrichters (5) angeschlossen ist, und daß gegebenenfalls innerhalb der Kühllufteinblasöffnung (19) eine Wassereinspritzvorrichtung (24) vorgesehen ist.

8. Mischer nach einem der Ansprüche 1 bis 6, dadurch gekennzeichnet, daß ein Gebläserotor (35) unterhalb des Bodens des Mischbehälters (2) auf der Rührwerkswelle (13) sitzt, und daß der Druckraum des Gebläses zur Einblasung von Kühlluft in die Umwälzkammer (3') über eine oder mehrere Verbindungsleitungen (36) mit dem Behälterinnenraum an dessen bodenseitigen Ende verbunden ist (Fig. 6).

9. Verfahren zum Betrieb eines Mischers nach einem der Ansprüche 1 bis 8, dadurch gekennzeichnet, daß die Übergangsöffnung (10) während der Abkühlung des Thermoplastmaterials in der Umwälzkammer geschlossen wird, so daß das aufgegebene Material während dieser Zeitspanne in der Zerkleinerungskammer (17) gepuffert wird.

10. Verfahren nach Anspruch 9, dadurch gekennzeichnet, daß die Übergangsöffnung (10) bereits bei der Aufgabe und Zerkleinerung des Gutes in der Zerkleinerungskammer (17) geschlossen wird, so daß in der Zerkleinerungskammer auch eine Verdichtung des Materials erfolgt, und daß nachfolgend zur Austragung des Gutes in die Umwälzkammer (3') die Übergangsöffnung geöffnet und nach beendeter Austragung wieder geschlossen wird.

## Claims

1. Mixing apparatus for the comminution and densification of thermoplast material, particularly of waste material consisting of foils, fibres, small bands, and hollow bodies, having a feed hopper (5) provided on the cover (4) of a mixing container (2), having a circulation chamber (3') with an outlet slide (29) provided by the mixing container (2), in which (chamber) after comminution and densification the cooling of the thermoplast material is effected, having a vertical agitator shaft (13), which, near the bottom, carries stirring wings (15), extending approximately to the container wall (3), within the circulation chamber (3'), and having a head-end comminution chamber (17), wherein comminution blades (18) rotate, driven by the agitator shaft (13), and which is provided with fixed counter-blades (12), and which comprises an end plate (16 or 16', respectively) at its bottom-sided end, directed to the circulation chamber (3'), and is in communication, via a passage opening (10), with the circulation chamber (3'), characterized in that the passage opening (10), provided in the annular wall (9) of the comminution chamber (17) is provided with a shut-off device for the closing thereof during the cooling of the thermoplast material in the circulation chamber (3').

2. Mixing apparatus according to claim 1, characterized in that the end plate (16) is rigidly connected with the agitator shaft (13), and supports the comminution blades (18) on its inner side, turned away from the circulation chamber (3'), and that the border of the end plate (16) stands directly opposite the annular wall (9) (Figures 1 and 6).

3. Mixing apparatus according to claim 1, characterized in that on the feed hopper (5) there is attached an annular attachment (30) with counter-blades (12'), situated within the comminution chamber (17) and oriented concentrically to the agitator shaft (13), that a disk-shaped head-piece (13') of the agitator shaft keeps free a narrow gap opposite the annular wall (30') of the annular attachment and carries the comminution blades (18), and that, in addition, there are provided on the agitator shaft (13) mixing wings (45), situated within the comminution chamber (Figure 7).

4. Mixing apparatus according to claim 1 or claim 3, characterized in that the end plate (16') is firmly connected with the annular wall (9) of the comminution chamber (17), and that the agitator shaft (13) extends through a passage of the end plate (16') and is supported preferably in a bearing ring (38) thereof (Figures 4, 5 and 7).

5. Mixing apparatus according to claim 4, characterized in that there is firmly held a stator ring (40) within the circulation chamber (3') on the periphery of the end plate (16') via webs (39), leaving inlet openings free between such webs, which stator ring carries a peripheral screen plate (42), and that a rotor disk (43), connected with the agitator shaft (13) and supporting stirring wings (15') on its periphery, stands directly opposite, with its peripheral edge, the free front edge of the peripheral screen plate (42), the rotor disk carrying cutting ledges (44), which cooperate with counter-cutting ledges (41), held on the stator ring (40) (Figure 7).

6. Mixing apparatus according to claim 4, characterized in that there are provided within the comminution chamber (17) discharge wings (32), connected with the agitator shaft (Figures 4 and 5).

7. Mixing apparatus according to claim 1 to 6, characterized in that there is provided in the shell (3) of the mixing container (2) above the bottom of a closeable cooling air injection opening (19), which is in communication with a fan (21), the suction side of which, for the injection of the cooling air into the circulation chamber (3'), being connected to cavity of the feed hopper (5), and that possibly there is provided, within the cooling air injection opening (19), a water injection device (24).

8. Mixing apparatus according to one of claims 1 to 6, characterized in that a fan rotor (35) is placed below the bottom of the mixing container (2) on the agitator shaft (13), and that the pressure space of the fan, for the injection of the cooling air into the circulation chamber (3'), is connected via one or more connecting pipes (36) with the interior space of the container at the bottom-sided end thereof (Figure 6).

9. Process for the operation of a mixing apparatus according to one of claims 1 to 8, characterized in that the passage opening (10) is closed during the cooling of the thermoplast material in the circulation chamber so that the charged material is buffered in the comminution chamber (17) during this space of time.

10. Process according to claim 9, characterized in that the passage opening (10) is closed already in the charge and comminution of the material in the comminution chamber (17) so that also a densification of the material takes place in the comminution chamber, and that subsequently to the discharging of the material into the circulation chamber (3') the passage opening is opened and is closed again having finished the discharging.

**Revendications**

1. Mélangeur pour le broyage et le compactage de matière thermoplastique, en particulier de déchets de feuilles, de fibres, de petites bandes ou de corps creux, comprenant une trémie de chargement (5) agencée sur le courvercle (4) d'un récipient mélangeur (2), une chambre de circulation (3'), formée par le récipient mélangeur (2) et pourvue d'un tiroir d'évacuation (29), dans laquelle le refroidissement de la matière thermoplastique a lieu après broyage et compactage, un arbre d'agitation vertical (13), qui supporte à l'intérieur de la chambre de circulation (3'), à proximité du fond, des palettes d'agitation (15) qui vont jusqu'approximativement la paroi (3) du récipient, et une chambre de broyage (17) du côté tête, dans laquelle tournent des couteaux de broyage (18) entraînés par l'arbre d'agitation (13) et qui est pourvue de contre-couteaux (12) fixes, présente une plaque de fermeture (16 ou respectivement 16') à son extrémité du côté fond, orientée vers la chambre de circulation (3'), et est en communication avec la chambre de circulation (3') par l'intermédiaire d'un orifice de passage (10), caractérisé en ce que l'orifice de passage (10) prévu dans la paroi annulaire (9) de la chambre de broyage (17) est réalisé de manière à pouvoir être obturé en vue de sa fermeture pendant le refroidissement de la matière thermoplastique dans la chambre de circulation (3').

2. Mélangeur suivant la revendication 1, caractérisé en ce que la plaque de fermeture (16) est reliée de manière fixe à l'arbre d'agitation (13) et porte les couteaux de broyage (18) sur sa face interne orientée à l'opposé de la chambre de circulation (3') et en ce que le bord de la plaque de fermeture (16) fait directement face à la paroi annulaire (9) (figures 1 et 6).

3. Mélangeur suivant la revendication 1, caractérisé en ce qu'une saillie annulaire (30), située à l'intérieur de la chambre de broyage (17), dressée de manière concentrique par rapport à l'arbre d'agitation (13) et munie de contre-couteaux (12'), est agencée sur la trémie de chargement (5), en ce qu'une pièce de tête (13') en forme de disque de l'arbre d'agitation laisse libre une mince fente par rapport à la paroi annulaire (30') de la saillie annulaire et supporte les couteaux de broyage (18) et en ce qu'en supplément des palettes mélangeuses (45) situées à l'intérieur de la chambre de broyage sont prévues sur l'arbre d'agitation (13) (figure 7).

4. Mélangeur suivant l'une ou l'autre des revendications 1 et 3, caractérisé en ce que la plaque de fermeture (16') est reliée de manière fixe à la paroi annulaire (9) de la chambre de broyage (17) et en ce que l'arbre d'agitation (13) passe à travers un passage de la plaque de fermeture (16') et est de préférence supporté dans un anneau de support (38) de cette plaque (figures 4, 5 et 7).

5. Mélangeur suivant la revendication 4, caractérisé en ce qu'à l'intérieur de la chambre de circulation (3'), à la périphérie de la plaque de fermeture (16'), est maintenu de manière fixe, par l'intermédiaire de barrettes (39) laissant libres entre elles des orifices de passage, un anneau de stator (40) qui supporte une plaque de tamisage circonférentielle (42) et en ce qu'un disque de rotor (43) relié à l'arbre d'agitation (13) et supportant sur sa périphérie des palettes d'agitation (15') fait immédiatement face, avec son bord périphérique, au bord frontal libre de la plaque de tamisage circonférentielle (42), le disque de rotor supportant des nervures de coupe (44) qui coopèrent avec des nervures de contre-coupe (41) fixées sur l'anneau de stator (40) (figure 7).

6. Mélangeur suivant la revendication 4, caractérisé en ce que des ailettes d'évacuation (32) reliées à l'arbre d'agitation sont prévues à l'intérieur de la chambre de broyage (17) (figures 4 et 5).

7. Mélangeur suivant l'une des revendications 1 à 6, caractérisé en ce que, dans la chemise (3) du récipient mélangeur (2), est prévu, au-dessus du fond, un orifice d'injection d'air de refroidissement obturable (19) qui est en communication avec un ventilateur (21) dont le côté aspiration est raccordé, pour l'injection d'air de refroidissement dans la chambre de circulation (3'), à l'entonnoir de la trémie de chargement (5) et en ce qu'éventuellement un dispositif de pulvérisation d'eau (24) est prévu à l'intérieur de l'orifice d'injection d'air de refroidissement (19).

8. Mélangeur suivant l'une des revendications 1 à 6, caractérisé en ce qu'un rotor de ventilateur (35) est disposé en dessous du fond du récipient mélangeur (2), sur l'arbre d'agitation (13), et en ce que la chambre de compression du ventilateur d'injection d'air de refroidissement dans la chambre de circulation (3') est reliée, par l'intermédiaire d'un ou de plusieurs conduits de liaison (36), à l'espace interne du récipient, à son extrémité di côté du fond (figure 6).

9. Procédé pour la mise œuvre d'un mélangeur suivant l'une des revendications 1 à 8, caractérisé en ce que l'orifice de passage (10) est fermé pendant le refroidissement de la matière thermoplastique dans la chambre de circulation de façon que la matière chargée soit tamponnée dans la chambre de broyage (17) pendant cet espace de temps.

10. Procédé suivant la revendication 9, caractérisé en ce que l'orifice de passage (10) est déjà fermé lors du chargement et du broyage de la matière dans la chambre de broyage (17), de sorte que, dans la chambre de broyage, il se produit aussi un compactage de la matière, et en ce qu'ensuite, pour l'évacuation de la matière dans la chambre de circulation (3'), l'orifice de passage est ouvert et refermé après la fin de l'évacuation.

*Fig. 1*

Fig. 2

0 004 935

Fig. 3

13

Fig. 4

Fig. 5

Fig. 6

0 004 935

Fig.7